(19) **Europäisches Patentamt / European Patent Office / Office européen des brevets**

(11) **EP 1 742 205 B1**

(12) **EUROPEAN PATENT SPECIFICATION**

(45) Date of publication and mention
of the grant of the patent:
**30.04.2008 Bulletin 2008/18**

(51) Int Cl.:
*G11B 5/78* (2006.01)  *G11B 5/62* (2006.01)
*G11B 5/84* (2006.01)  *B26D 1/24* (2006.01)

(21) Application number: **06014282.5**

(22) Date of filing: **10.07.2006**

(54) **Magnetic recording medium**

Magnetisches Aufzeichnungsmedium

Support d'enregistrement magnétique

(84) Designated Contracting States:
**DE FR GB**

(30) Priority: **08.07.2005 JP 2005200429**

(43) Date of publication of application:
**10.01.2007 Bulletin 2007/02**

(73) Proprietor: **FUJIFILM Corporation
Minato-ku
Tokyo (JP)**

(72) Inventor: **Kanazawa, Minoru
Odawara-shi,
Kanagawa (JP)**

(74) Representative: **HOFFMANN EITLE
Patent- und Rechtsanwälte
Arabellastrasse 4
81925 München (DE)**

(56) References cited:
**DE-A1- 4 112 724          US-A- 5 358 777
US-A1- 2001 009 726**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

This invention relates to a magnetic recording medium used as, for example, an external recording medium for computer data storage.

BACKGROUND OF THE INVENTION

In recent years, magnetic tapes for recording computer data (backup tapes) have been extensively researched and developed. To cope with the ever increasing amount of information to be processed and the downsizing of write/read systems, it is desired that magnetic tapes for such applications have larger recording capacities as well as be more compact. Approaches to more compact magnetic tapes include size reduction of magnetic particles, increase of magnetic particles packing density, and reduction of magnetic layer thickness. Magnetic tapes are repeatedly used at high running speeds in the write/read systems so as to rapidly process a large volume of information. Hence, they are required to have higher reliability than ever before to guarantee stable recording and playback with excellent running durability and no errors even when used under broad surrounding conditions, particularly under widely fluctuating temperature and humidity conditions.

To eliminate the thickness loss problem, such as output reduction, associated with a magnetic layer having a single layer structure, a magnetic recording medium having a dual layer structure has recently been proposed, which comprises a nonmagnetic support, a nonmagnetic layer, and a magnetic layer with a reduced thickness in this order (see, e.g., JP-A-5-182178). Thickness reduction of a magnetic layer allows for high density recording, resulting in achievement of greater recording capacity.

To use a magnetic tape having the dual layer structure is advantageous for obtaining greater recording capacity. To reduce the total thickness of a magnetic tape is also a frequently used approach to achieve large recording capacity. In general, a magnetic tape with a reduced thickness has reduced tape strength, which tends to result in reduction of running durability, for example, tape deformation during high speed running. To avoid this, it has been proposed to use a relatively high-stiffness aramid film, etc. as a support of magnetic tapes (see, e.g., JP-A-11-296839). Even with such a support, nevertheless, cases are found during tape manufacturing in which slitting a magnetic material of continuous, broad web form to desired width (e.g., 3.8 mm, 8 mm or half inch) results in formation of a ridge running on the magnetic layer or backcoat layer all along the resulting tape edge.

Fig. 8 illustrates a conventional slitting apparatus described, e.g., in JP-A-2001-273629. The slitting apparatus shown has an upper blade shaft 81 and a lower blade shaft 82 that are parallel to each other. A plurality of upper blades 84, each having a circular perimeter, are secured along the upper blade shaft 81 via respective holders 20 each having a circular perimeter. A plurality of lower blades 85, each having a circular perimeter, are fitted directly to the lower blade shaft 82. The upper blades 84 are arranged such that their cutting edges 841 are regularly spaced in the axial direction (i.e., the axial direction of the upper blade shaft 81 and the lower blade shaft 82). The lower blades 85 are also arranged with their cutting edges 851 regularly spaced apart along the axial direction. One upper blade 84 and one lower blade 85 make a mating pair such that their cutting edges 841 and 851 are adjacent to each other. The vertical positions of the upper blade 84 and the mating lower blade 85 are such that they overlap each other at their edges in their radial directions (i.e., the radial direction from the upper blade shaft 81 and the radial direction from the lower blade shaft 82). All the holders 83 each have a cutout made along their outer peripheral corner on the same side facing one of the opposite axial directions (i.e., the side facing the right hand side of the drawing) to provide a blade fitting recess 86, in which the upper blade 84 is fitted while being urged by a spring 87 toward the one of the opposite axial directions. The lower blades 85 each have a cutout made along their outer peripheral corner on the same side facing one of the opposite axial directions (i.e., the side facing the right hand side of the drawing) to provide a blade receiving recess 88, which receives the cutting edge 841 of the facing upper blade 84.

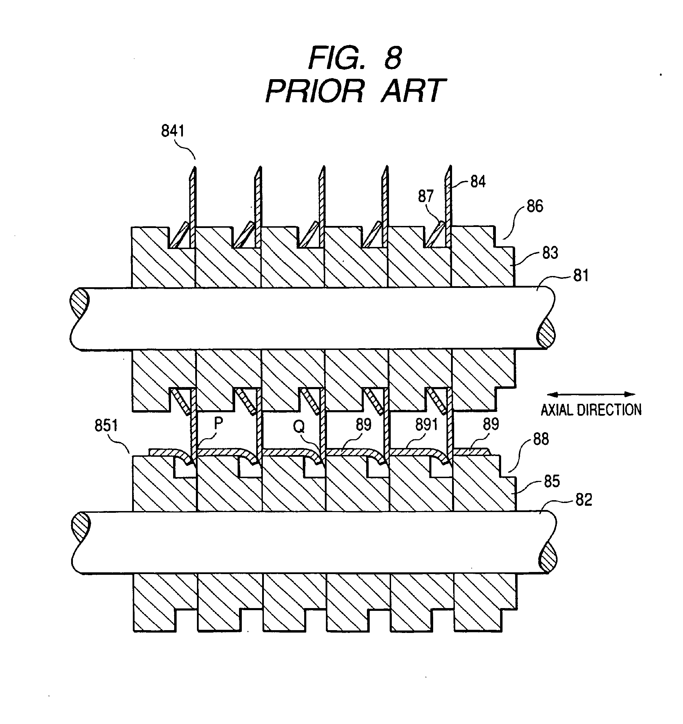

The above-described slitting apparatus is used as follows. The set of upper blades 84 and the set of lower blades 85 are rotated by the respective shafts 81 and 82. A broad web of a magnetic material (hereinafter "magnetic web" or simply "web") 89 is fed between the upper blades 84 and the lower blades 85 in the direction perpendicular to the plane of drawing Fig. 8 with its magnetic layer facing up. The magnetic web 89 is thus cut into strips, i.e., magnetic tapes 891.

Shear slitting the web 89 between each pair of the upper blade 84 and the lower blade 85 produces two slit edges having the respective slit surfaces P and Q. In what follows, the side of the slit edge that is not drawn down in shear slitting because of the restraint by the peripheral surface of the lower blade 85 will be referred to as a restrained side, and the slit surface of the restrained side edge will be called a slit surface P. On the other hand, the side of the opposite edge that is drawn down by the upper blade 84 in shear slitting will be referred to as a non-restrained side, and the slit surface of the non-restrained side edge will be called a slit surface Q.

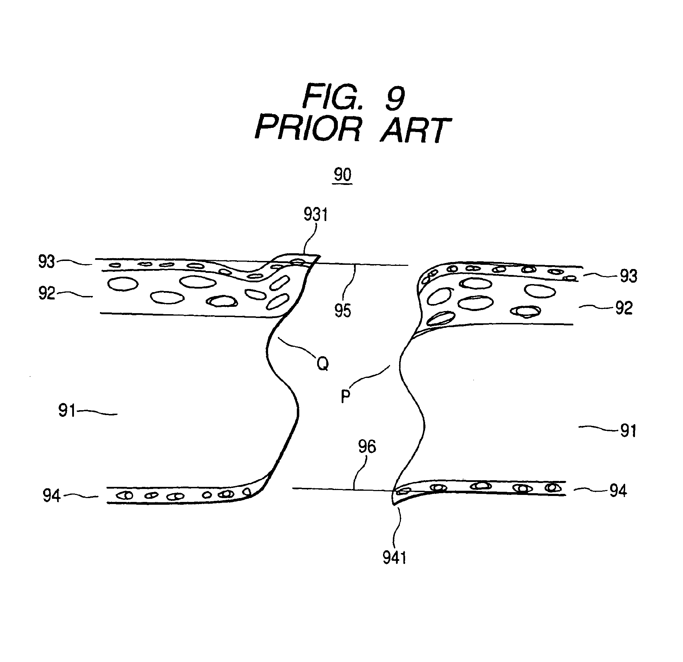

Fig. 9 presents a cross-section of a magnetic web separated into magnetic tapes 90 by the use of such a conventional slitting apparatus. The magnetic tape 90 has a support 91, a nonmagnetic layer 92 containing nonmagnetic powder and a binder on one side of the support 91, a magnetic layer 93 containing ferromagnetic powder and a binder on the nonmagnetic layer 92, and a backcoat layer 94 on the other side of the support 91. It is seen that the magnetic layer 93 forms a ridge 931 protruding above the straight line 95 indicating the surface plane of the magnetic layer 93 along the non-restrained side edge having the slit surface Q. It is also seen that the backcoat layer 94 also forms a ridge 941 protruding beyond the straight line 96 indicative of the surface plane of the backcoat layer 94 along the restrained side edge having the surface P.

It follows that the resulting magnetic tapes suffer from thickness variation in the width direction and, when wound in tape packs, tape pack problems such as a radial pattern appearing on the edge of a tape pack can occur. Poor wind quality also results in an uneven edge of the tape pack. In a fast forward (FF) or rewind (REW) mode at high speeds, the ridge 931 on the magnetic layer 93 and the ridge 941 on the backcoat layer are scraped against drive guides, and the uneven edges of a tape pack are also scraped against the flange of the drive guides, resulting in production of fine scrapings (tape dust). The fine scrapings have given rise to such problems as head contamination, which leads to a reduction in C/N and occurrence of dropouts.

## SUMMARY OF THE INVENTION

An object of the present invention is to provide a magnetic recording material that achieves large recording capacity, is free from the tape pack problems (such as appearance of a radial pattern) and the output reduction problem, produces no fine scrapings in high speed running, which cause head clogging and dropouts, thereby exhibits good running durability and electromagnetic characteristics, and is particularly beneficial for computer data storage applications.

The above object is accomplished by the provision of a magnetic recording medium having the following characteristics. The magnetic recording medium has a support, a magnetic layer containing ferromagnetic powder and a binder on one side of the support, and a backcoat layer on the other side of the support. The magnetic recording medium is obtained by slitting to width a magnetic material of broad width and continuous length. The magnetic recording medium has no ridge formed of the magnetic layer and protruding above the surface plane of the magnetic layer along the edge thereof, as already described in US 2001/0009726.

The present invention provides the magnetic recording medium, in which:

(1) The magnetic recording medium has no ridge formed of the backcoat layer and protruding beyond the surface plane of the backcoat layer along the edge thereof;
(2) The backcoat layer has a Young's modulus of 600 to 2000 kg/mm$^2$ in its thickness direction;
(3) The support has a Young's modulus of 700 to 2000 kg/mm$^2$ in its longitudinal direction; and
(4) The magnetic recording medium further has a nonmagnetic layer containing nonmagnetic powder and a binder between the support and the magnetic layer.

The present invention provides a magnetic recording material that achieves large recording capacity, is free from the tape pack problems (such as appearance of a radial pattern) and the output reduction problem, produces no fine scrapings in high speed running, which cause head clogging and dropouts, and thereby exhibits good running durability and electromagnetic characteristics. The magnetic recording medium of the invention is particularly beneficial for computer data storage applications.

## BRIEF DESCRIPTION OF THE DRAWINGS

Fig. 1 is a cross-section of a magnetic tape according to the present invention.
Fig. 2 is a profile of an upper and a lower blade.
Fig. 3 (Figs. 3A and 3B) is an upper and a lower blade profile showing the width of their rounded portion in the radial direction.
Fig. 4 illustrates how the magnetic layer, nonmagnetic layer, support, and backcoat layer are distorted when shear-slit.
Fig. 5 is a slitting apparatus suitably used in the present invention.
Fig. 6 is a frontal view of a slitter.
Fig. 7 is an enlarged partial view of the slitter of Fig. 6.
Fig. 8 is a slitting apparatus conventionally employed.
Fig. 9 is a cross-section of a conventional magnetic tape produced using a conventional slitting apparatus.

## DETAILED DESCRIPTION OF THE INVENTION

The magnetic recording medium of the present invention will be described further taking, for instance, a magnetic tape as an embodiment of the magnetic recording medium.

The feature of the magnetic recording medium of the invention resides in that there is no ridge of the magnetic layer that protrudes beyond the surface plane of the magnetic layer along the slit edge thereof.

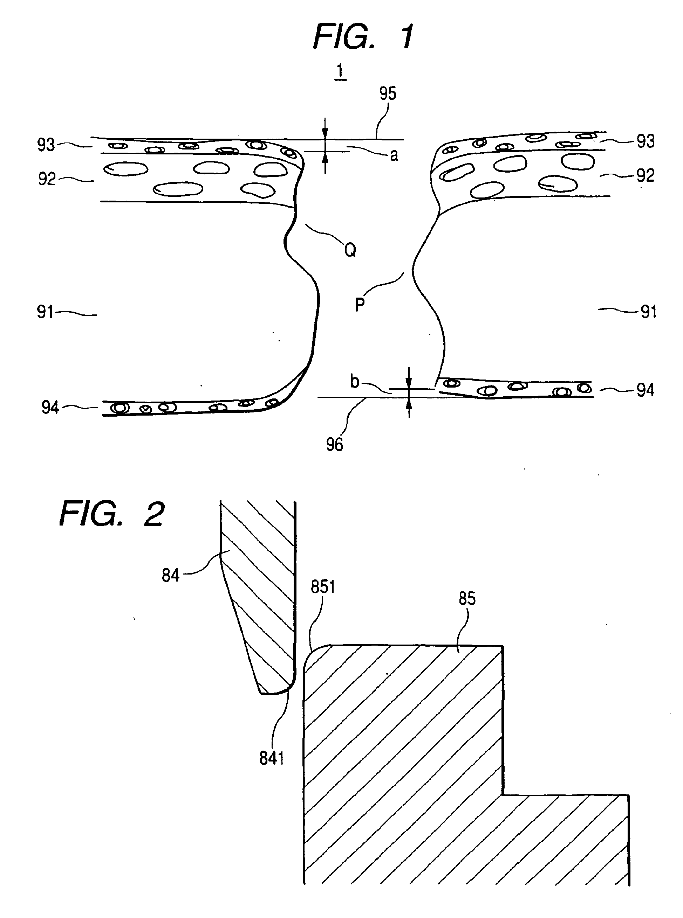

Fig. 1 is a cross-section of a magnetic tape of the invention that is obtained using a slitting apparatus like the one illustrated in Fig. 8.

The magnetic tape 1 of Fig. 1 has a support 91, a nonmagnetic layer 92 containing nonmagnetic powder and a binder on one side of the support 91, a magnetic layer 93 containing ferromagnetic powder and a binder on the nonmagnetic layer 92, and a backcoat layer 94 on the other side of the support 91. There is no ridge formed of the magnetic layer 93 protruding above a straight line 95 indicative of the surface plane of the magnetic layer 93 along either edge of the tape 1 (either the edge with the slit surface P or the edge with the slit surface Q). It is preferred that, nor is there a ridge formed of the backcoat layer 94 protruding beyond a straight line 96 indicative of the surface plane of the backcoat layer 94 along either edge of the tape 1 (either the edge with the slit surface P or the edge with the slit surface Q).

The term "surface plane" as used of the magnetic layer denotes a plane extending horizontally from the surface of the magnetic layer. Likewise the term "surface plane" as used of the backcoat layer means a plane extending horizontally from the surface of the backcoat layer. The magnetic recording medium of the invention is characterized in that the magnetic layer and, preferably, the backcoat layer are free from any ridges protruding above the respective surface planes. Preferably, the distance a from the straight line 95 indicative of the surface plane of the magnetic layer 93 to the intersection between the surface of the magnetic layer 93 and the slit surface Q (non-restrained side) or the slit surface P (restrained side), namely the tip of the edge of the magnetic layer 93 is 0.1 $\mu$m or larger, still preferably 0.1 to 0.5 $\mu$m. Similarly, the distance $\underline{b}$ from the straight line 96 indicative of the surface plane of the backcoat layer 94 to the intersection between the surface of the backcoat layer 94 and the non-restrained slit surface Q or the restrained slit surface P, namely the tip of the edge of the backcoat layer 94 is preferably 0.1 $\mu$m or larger, still preferably 0.1 to 0.5 $\mu$m.

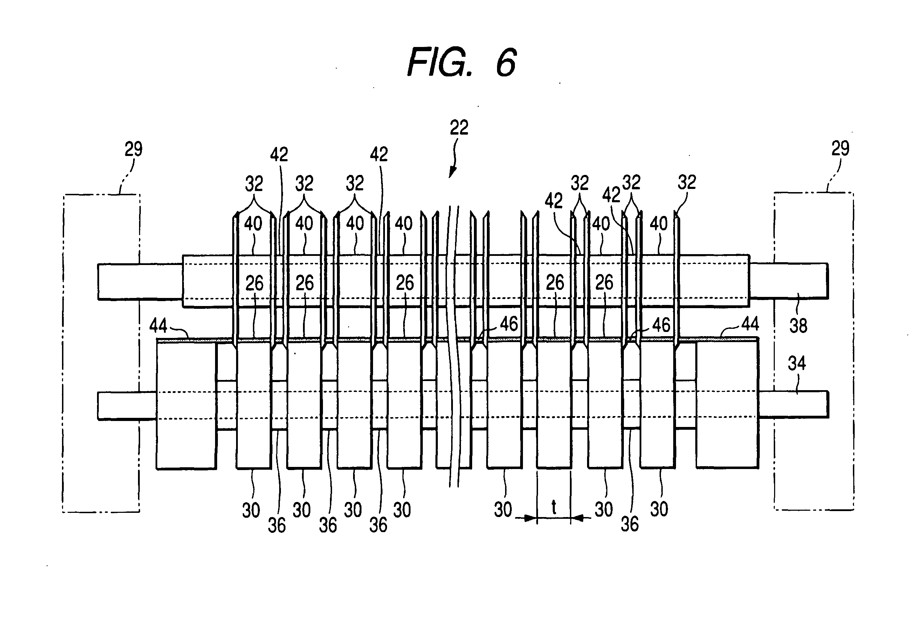

While the magnetic tape of the present embodiment has a restrained slit surface P on one edge thereof and a non-restrained slit surface Q on the opposite edge thereof, the present invention includes under its scope a magnetic recording medium having a restrained slit surface P on both slit edges thereof, which will be described later with reference to Fig. 6, and a magnetic recording medium with a non-restrained slit surface Q on both slit edges thereof. In any case, it is preferred that the distances $\underline{a}$ and $\underline{b}$ be in the respective ranges recited.

In order for the magnetic recording medium to be free from ridges protruding above the surface planes of the magnetic layer and the backcoat layer along the slit edges thereof, there are suitable means (1) and (2) that can be taken in combination.

(1) The Young's modulus of the magnetic layer in the thickness direction, that of the backcoat layer in the thickness direction, and that of the support in the longitudinal direction are controlled either dependently or independently.
(2) The profiles of the upper and lower blades used for slitting are properly selected.

The Young's modulus of the magnetic layer in the thickness direction is 1000 to 2500 kg/mm$^2$, preferably 1250 to 2300 kg/mm$^2$, still preferably 1300 to 1500 kg/mm$^2$. The Young's modulus of the backcoat layer in the thickness direction is preferably 600 to 2000 kg/mm$^2$, still preferably 700 to 1800 kg/mm$^2$, even still preferably 800 to 1300 kg/mm$^2$.

While the Young's moduli of the magnetic layer and backcoat layer may be constant within the above respective ranges throughout their thickness, it is only necessary for these layers to have a Young's modulus in the respective ranges at part of their thickness.

The Young's modulus of the support is controllable by the selection of material, stretch method, and the like. The Young's modulus of the support is preferably 700 to 2000 kg/mm$^2$, still preferably 933 to 1749 kg/mm$^2$.

The Young's modulus of the support is measured as follows using a tensile tester, for example, Strograph V1-C from Toyo Seiki Kogyo Co., Ltd. A specimen is pulled under a given condition (load: 5 kgf; pulling speed: 50 mm/min; atmosphere: 23°C, 50% RH; specimen size: 0.5 inch x 10 cm) to obtain elongation vs. load plots. The slope of the linear part of the plots at 0.5% elongation is calculated to give an MD Young's modulus.

The Young's moduli of the magnetic layer and backcoat layer are controllable by selecting at least one of the composition including powder (material, particle size, hardness, etc.), a binder (material, glass transition point, a curing agent to be combined with, etc.), and a lubricant, calendering conditions (roll material, temperature, linear pressure, speed, etc.), heat treating conditions (temperature, time, etc.), and so forth.

It is preferred that the profile of the cutting edge of each of the upper and lower blades be rounded. Fig. 2 is an enlarged cross-section of the tips of the upper and lower blades. As illustrated, the cutting edge 841 of the upper blade 84 and the cutting edge 851 of the lower blade 85 are both rounded. The term "rounded" as used of a cutting edge means that the cutting edge has a curved contour, such as an arc shape. The slitting apparatus on which the upper blades 84 and the lower blades 95 are mounted includes the one illustrated in Fig. 8.

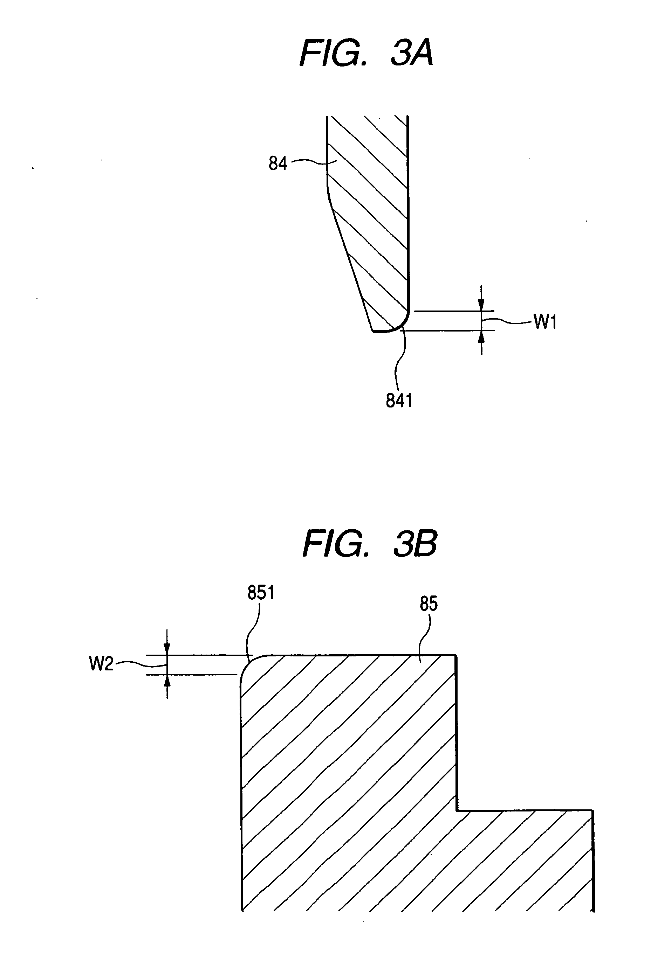

As a measure of the degree of edge rounding, the width of the rounded portion in the radial direction (of the blade) is preferably 0.9 to 3.0 $\mu$m, still preferably 1.5 to 3.0 $\mu$m. As shown in Figs. 3A and 3B, the "width of the rounded portion in the radial direction" is the width W1 or W2 of the rounded portion of the cutting edge 841 or 851 when seen from a direction perpendicular to the axial direction with the upper blade 84 and the lower blade 85 fitted to the upper blade shaft 81 and the lower blade shaft 82, respectively.

The grinding method for obtaining such a blade profile is described, e.g., in JP-A-2001-273629 supra.

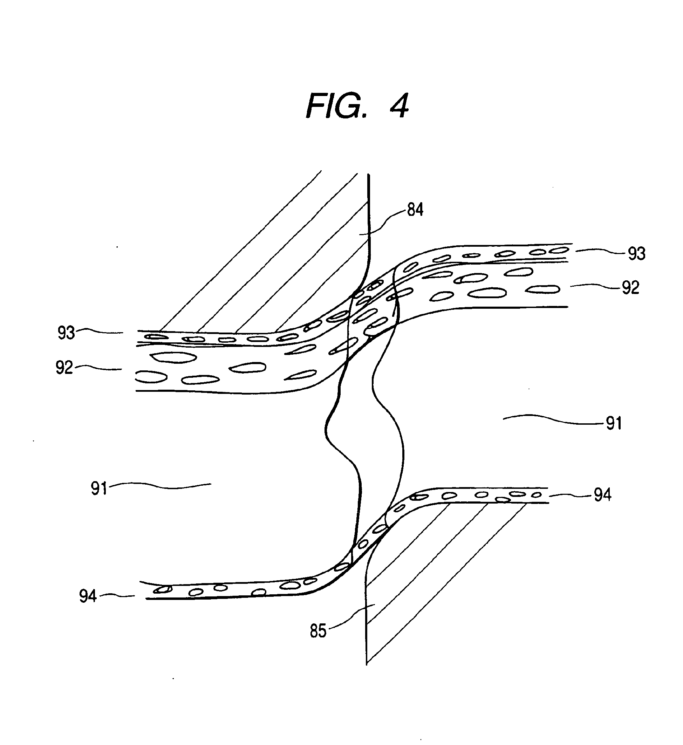

The rounded cutting edge profiles of the upper blade 84 and the lower blade 85 create an allowance for distortion of each of the magnetic layer 93, the nonmagnetic layer 92, and the backcoat layer 94 on shear slitting as illustrated in Fig. 4. Such an allowance for deformation prevents the magnetic layer and the backcoating layer from protruding.

In the above-described embodiment, the upper and lower blades with a rounded cutting edge are mounted on a conventional slitting apparatus illustrated in Fig. 8. In the present invention it is preferred that the upper and lower blades with a rounded cutting edge be mounted on a slitting apparatus described below.

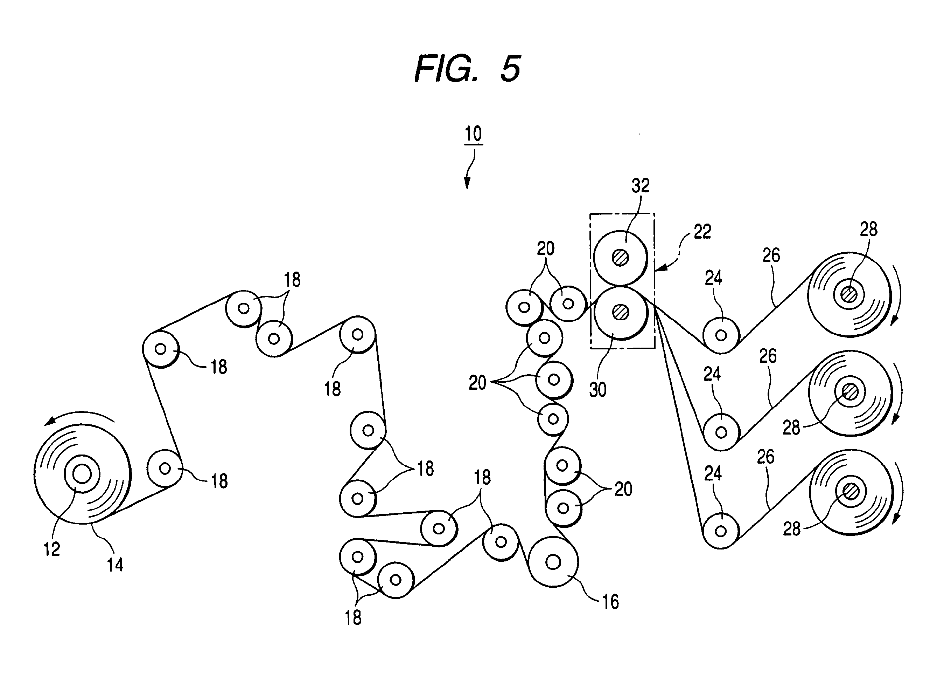

Fig. 5 illustrates a slitting apparatus 10 suitably used in the present invention. The slitting apparatus 10 is composed mainly of a feed reel 12 , a feed roller 16, guide rollers 18, a slitter 22, pass rollers 24, and take-up hubs 28.

A wound roll of a magnetic web 14 rests on the feed reel 12.

The feed roller 16 operates to unwind the magnetic web 14 from the feed reel 12 continuously. A suction drum can be used as the feed roller 16, the roller for transporting the web 14. A suction drum rotates while sucking the web 14 onto the surface thereof. The suction drum has grooves engraved on its surface for ensuring the force to hold the web 14. Other known web feeding means may be used as the feed roller 16, such as pairs of nip rollers between which the magnetic web 14 is passed and transported.

The magnetic web 14 fed from the feed reel 12 is transported to the slitter 22 as guided by the guide rollers 18. The slitter 22, the structure of which will be described later, is configured to slit the web 14 to width into 100 to 500 strips (magnetic tapes 26) between thick blades (lower blades) 30 and thin blades (upper blades) 32. The slit strips, i.e., magnetic tapes 26 are wrapped around the respective pass rolls 24 and taken up on the respective take-up hubs 28 rotating synchronously with the feed roller 16. The pass rollers 24 and the take-up hubs 28 are located at vertically varied positions. Adjacent magnetic tapes 26 are wrapped around different pass rollers 24 and wound on different take-up hubs 28.

Fig. 6 is a front view of the slitter 22. As illustrated, the slitter 22 has a plurality of thick blades 30 and a plurality of thin blades 32.

The thick blades 30, each having a cylindrical shape, are mounted on a shaft (a first shaft) 34 at a regular interval in the axial direction of the shaft 34 with a spacer 36 therebetween. The thick blades 30 each have a thickness t that is equal to the width of magnetic tapes 26 to be manufactured. The cutting edges of the thick blade 30 are preferably rounded as stated above.

The shaft 34 is rotatably supported by a main body 29 of the slitter 22 and connected to a motor (not shown). The motor operates to rotate the thick blades 30. The rotational speed of the thick blades 30 is adjusted according to the rotational speed of the feed roller 16 (see Fig. 5).

The thin blades 32, each having the shape of a thin disk, are mounted on a shaft (a second shaft) 38 that is disposed in parallel to the shaft 34 and rotatably supported by the main body 29. The shaft 38 is linked with the shaft 34 through a gear system (not shown) so as to rotate at a predetermined peripheral speed ratio to the shaft 34. The cutting edge of each thin blade 32 preferably has a rounded profile as stated above.

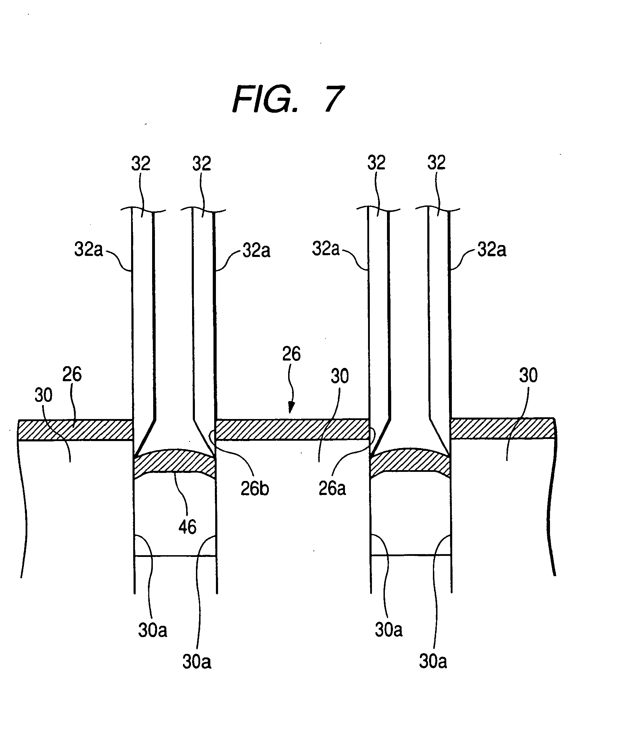

Either a spacer 40 or a spacer 42 is disposed between adjacent thin blades 32. The spacer 40 has the same thickness as the thickness t of the thick blade 30. The thickness of the spacer 42 is smaller than the thickness of the spacer 36 by double the thickness of the thin blade 32. The spacers 40 and the spacers 42 alternate between two adjacent thin blades 32. As illustrated in Fig. 7, each of the two sides 30a of the individual thick blades 30 is engaged with the flat side 32a (opposite to the beveled side) of the mating thin blade 32.

When the magnetic web 14 enters the slitter 22 wrapping around the thick blades (female blades) 30 as illustrated in Fig. 5, the thin blades (male blades) 32 penetrate through the web 14 with shearing force. Thus, the web 14 is slit to width t, the thickness of the thick blade 30, to produce a plurality of magnetic tapes 26. In Fig. 6, the parts indicated with numeral 44 are edges of the web 14 with no magnetic layer that are then discarded as waste trim. The parts indicated with numeral 46 are very thin strips between the blades, which are taken up on the respective cores and removed as waste trim.

Slitting conditions to be considered include slitting speed, depth of cut (overlap depth of the upper and lower blades), upper blade (thin blade) to lower blade (thick blade) peripheral speed ratio, and time of continuous use of the slitting blades.

The slitting speed is preferably as high as possible, ranging preferably 150 to 500 m/min, still preferably 180 to 500 m/min, even still preferably 180 to 450 m/min. The depth of cut is preferably as large as possible, ranging preferably 0.1 to 0.8 mm, still preferably 0.25 to 0.7 mm, even still preferably 0.3 to 0.5 mm. The peripheral speed ratio (thin blade 32 to thick blade 30) is preferably 0.1 to 10, still preferably 0.5 to 8, even still preferably 1 to 3.

The magnetic tape of the invention is obtained by slitting the magnetic material of continuous length along the longitudinal direction. The thickness of the magnetic tape is generally 3 to 20 $\mu$m. To achieve high capacity, the thickness is preferably 4 to 10 $\mu$m, still preferably 4 to 8 $\mu$m. The elements constituting the magnetic tape of the invention will then be described.

The support that can be used in the invention can be of biaxially stretched films of polyethylene naphthalate (PEN), polyethylene terephthalate (PET), polyamide, polyimide, polyamide-imide, aromatic polyamide, polybenzoxazole, etc. The support may previously be subjected to a surface treatment, such as a corona discharge treatment, a plasma treatment, an adhesion enhancing treatment, and a heat treatment. The support desirably has a highly smooth surface as with a centerline average surface roughness of 0.1 to 20 nm, still preferably 1 to 10 nm, measured with a cut-off length of 0.25 mm. It is also desirable for the support to be free from projections of 1 $\mu$m or greater. The support preferably has a thickness of, e.g., 4 to 15 $\mu$m, preferably 4 to 9 $\mu$m. Where in using a thin support, the backcoat layer roughness is easily transferred under handling tension. This can effectively be prevented by using a polyurethane resin having a high glass transition point in a magnetic layer. In designing a 7 $\mu$m or thinner support, it is advisable to use a PEN film or an aromatic polyamide (e.g., aramid) film as a support.

The nonmagnetic layer contains nonmagnetic powder and a binder and is substantially nonmagnetic. It must be "substantially nonmagnetic" so as not to affect the electromagnetic characteristics of the magnetic layer provided thereon, but existence of a small amount of magnetic powder that would not influence the electromagnetic characteristics of the magnetic layer is acceptable. The nonmagnetic layer usually contains a lubricant in addition to the above components.

The nonmagnetic powder that can be used in the nonmagnetic layer includes inorganic nonmagnetic powders and carbon black. The inorganic nonmagnetic powders are preferably those which are relatively hard, e.g., those having a Mohs hardness of 5 or higher (still preferably 6 or higher) . Examples of such nonmagnetic powders include $\alpha$-alumina, $\beta$-alumina, $\gamma$-alumina, silicon carbide, chromium oxide, cerium oxide, $\alpha$-iron oxide, corundum, silicon nitride, titanium carbide, titanium dioxide, silicon dioxide, boron nitride, zinc oxide, calcium carbonate, calcium sulfate, and barium sulfate. They can be used either individually or as a combination thereof. Preferred of them are titanium oxide, $\alpha$-alumina, $\alpha$-iron oxide, and chromium oxide. The average particle size of the inorganic nonmagnetic powder is preferably 0.01 to 1.0 $\mu$m, still preferably 0.01 to 0.5 $\mu$m, even still preferably 0.02 to 0.1 $\mu$m. It is preferred to use a nonmagnetic powder having a Mohs hardness of 5 or higher, preferably 6 or higher, that can serve as abrasive grains in a proportion of 3 to 25% by weight, preferably 3 to 20% by weight, based on the total nonmagnetic powder.

Carbon black is used in the nonmagnetic layer for the purpose of making the magnetic layer electroconductive together with the inorganic nonmagnetic powder thereby to prevent static electrification and also of securing surface smoothness of the magnetic layer provided on the nonmagnetic layer. Carbon black to be used in the nonmagnetic layer preferably has an average particle size of 35 nm or smaller, still preferably 10 to 35 nm, a specific surface area of 5 to 500 $m^2$/g, still preferably 50 to 300 $m^2$/g, a DBP absorption of 10 to 1000 ml/100 g, still preferably 50 to 300 ml/100 g, a pH of 2 to 10, a water content of 0.1 to 10%, and a tap density of 0.1 to 1 g/cc.

Carbon black species prepared through various processes are usable, including furnace black, thermal black, acetylene black, channel black, and lamp black. Specific examples of commercially available carbon black products which can be used in the invention include Black Pearl S 2000, 1300, 1000, 900, 800, and 700, and Vulcan XC-72 (from Cabot Corp.); #80, #60, #55, #50, and #35 (fromAsahi Carbon Co. , Ltd.) ; #3950B, #3750B, #3250B, #2400B, #2300B, #1000, #90, #40, #30, and #10B (from Mitsubishi Chemical Corp.); Conductex SC, RAVEN 150, 50, 40, and 15 (from Columbian Carbon); and Ketjen Black EC, Ketjen Black ECDJ-500, and Ketjen Black ECDJ-600 (from Lion Akzo Co., Ltd.).

The amount of carbon black in the nonmagnetic layer is usually 3 to 25 parts, preferably 4 to 20 parts, still preferably 5 to 15 parts, by weight per 100 parts by weight of the total inorganic nonmagnetic powder.

The binder that can be used in the nonmagnetic layer includes thermoplastic resins, thermosetting resins, reactive resins, and mixtures thereof. Thermoplastic resins include homo- or copolymers containing a unit derived from vinyl chloride, vinyl acetate, vinyl alcohol, maleic acid, acrylic acid, an acrylic ester, vinylidene chloride, acrylonitrile, methacrylic acid, a methacrylic ester, styrene, butadiene, ethylene, vinyl butyral, vinyl acetal or a vinyl ether. Examples of such copolymers are vinyl chloride-vinyl acetate copolymers, vinyl chloride-vinylidene chloride copolymers, vinyl chloride-acrylonitrile copolymers, acrylic ester-acrylonitrile copolymers, acrylic ester-vinylidene chloride copolymers, acrylic ester-styrene copolymers, methacrylic ester-acrylonitrile copolymers, methacrylic ester-vinylidene chloride copolymers, methacrylic ester-styrene copolymers, vinylidene chloride-acrylonitrile copolymers, butadiene-acrylonitrile copolymers, styrene-butadiene copolymers, and chlorovinyl ether-acrylic ester copolymers.

Additionally, polyamide resins, cellulosic resins (e.g., cellulose acetate butyrate, cellulose diacetate, cellulose propionate, and nitrocellulose), polyvinylidene fluoride, polyester resins, polyurethane resins, and various rubber resins are also useful.

Useful thermosetting or reactive resins include phenolic resins, epoxy resins, thermosetting polyurethane resins, urea resins, melamine resins, alkyd resins, reactive acrylic resins, formaldehyde resins, silicone resins, epoxy-polyamide resins, polyester resin/isocyanate prepolymer mixtures, polyester polyol/polyisocyanate mixtures, and polyurethane/polyisocyanate mixtures.

The polyisocyanate includes tolylene diisocyanate, 4,4'-diphenylmethane diisocyanate (MDI), hexamethylene diisocyanate, xylylene diisocyanate, naphthylene-1,5-diisocyanate, o-toluidine diisocyanate, isophorone diisocyanate, and triphenylmethane triisocyanate. Further included are reaction products between these isocyanate compounds and polyols and polyisocyanates produced by condensation of the isocyanates.

The polyurethane resin includes those of known structures, such as polyester polyurethane, polyether polyurethane, polyether polyester polyurethane, polycarbonate polyurethane, polyester polycarbonate polyurethane, and polycaprolactone polyurethane.

It is preferred to use a binder system in the nonmagnetic layer, such as a combination of a polyurethane resin and at least one resin selected from vinyl chloride resins, vinyl chloride-vinyl acetate copolymers, vinyl chloride-vinyl acetate-vinyl alcohol copolymers, vinyl chloride-vinyl acetate-maleic anhydride copolymers, and nitrocellulose. The combination may further be combined with a polyisocyanate as a curing agent.

In order to ensure dispersing capabilities for powders and durability of the magnetic recording medium according to necessity, it is preferred to introduce into the above-recited binder resins at least one polar group by copolymerization or through addition reaction, the polar group being selected from -COOM, $-SO_3M$, $-OSO_3M$, $-P=O(OM)_2$, $-O-P=O(OM)_2$ (wherein M is a hydrogen atom or an alkali metal), -OH, $-NR_2$, $-N^+R_3$ (wherein R is a hydrocarbon group), an epoxy group, -SH, -CN, etc. The amount of the polar group to be introduced is preferably $10^{-1}$ to $10^{-8}$ mol/g, still preferably $10^{-2}$ to $10^{-6}$ mol/g.

The binder resins are usually used in a total amount of 5 to 50 parts, preferably 10 to 30 parts, by weight per 100 parts by weight of the nonmagnetic powder. In using a combination of a vinyl chloride resin, a polyurethane resin, and a polyisocyanate as a binder system, their proportions are preferably 5% to 70%, 2% to 50%, and 2% to 50%, by weight, respectively.

The lubricant in the nonmagnetic layer oozes on the surface of the magnetic layer to reduce the friction between the magnetic layer and a magnetic head and between a guide pole and a cylinder of a drive, thereby to maintain smooth sliding motion. The lubricants that can be used in the nonmagnetic layer for that purpose include fatty acids and fatty acid esters. The fatty acids include aliphatic carboxylic acids, such as acetic acid, propionic acid, octanoic acid, 2-ethylhexanoic acid, lauric acid, myristic acid, stearic acid, palmitic acid, behenic acid, arachic acid, oleic acid, linoleic acid, linolenic acid, elaidic acid, and palmitoleic acid, and mixtures thereof.

Examples of the fatty acid esters are butyl stearate, sec-butyl stearate, isopropyl stearate, butyl oleate, amyl stearate, 3-methylbutyl stearate, 2-ethylhexyl stearate, 2-hexadecyl stearate, butyl palmitate, 2-ethylhexyl myristate, butyl stearate/butyl palmitate mixture, oleyl oleate, butoxyethyl stearate, 2-butoxy-1-propyl stearate, dipropylene glycol monobutyl ether stearate, diethylene glycol dipalmitate, diol obtained by acylating hexamethylene diol with myristic acid, and glycerol oleate. They can be used either individually or as a combination thereof. The amount of the lubricant to be used in the nonmagnetic layer usually ranges from 0.2 to 20 parts by weight per 100 parts by weight of the total nonmagnetic powder.

The magnetic layer is made mainly of ferromagnetic powder and a binder. The magnetic layer usually contains a lubricant, electroconductive powder (e.g., carbon black), and an abrasive. The ferromagnetic powder includes $\gamma$-$Fe_2O_3$, $Fe_3O_4$, $FeO_x$ (where x=1.33 to 1.5), $CrO_2$, Co-doped $\gamma$-$Fe_2O_3$, Co-doped $\gamma$-$FeO_x$ (where x=1.33 to 1.5), ferromagnetic metal or alloy powders comprising Fe, Ni or Co as a main component (75% or more) (hereinafter inclusively referred to as "ferromagnetic metal powder (s)"), and tabular hexagonal ferrite powders. The ferromagnetic metal powders are preferred.

The ferromagnetic metal powder preferably has a specific surface area of 30 to 70 $m^2$/g and a crystallite size of 5 to 30 nm as measured by X-ray diffractometry. A ferromagnetic metal powder with too small a specific surface area fails to cope with high density recording. A ferromagnetic metal powder having too large a specific surface area is difficult to disperse well in a binder, failing to form a magnetic layer with a smooth surface, which also results in a failure to achieve high density recording.

The ferromagnetic metal powder should contain at least Fe, including Fe alone and alloys made mainly of Fe, Fe-Co, Fe-Ni, Fe-Zn-Ni or Fe-Ni-Co. It is preferred for the ferromagnetic metal powder to have sufficient magnetic characteristics to achieve high recording density, such as a saturation magnetization ($\sigma$s) of 110 emu/g (A·$m^2$/kg) or more, still preferably 120 to 170 A·$m^2$/kg, and a coercive force (Hc) of 1950 to 2650 Oe (156 to 212 kA/m), still preferably 2000 to 2500 Oe (160 to 200 kA/m). The ferromagnetic metal powder particles preferably have an average length of 0.5 $\mu$m or smaller, still preferably 0.01 to 0.3 $\mu$m, as measured under a transmission electron microscope with an aspect ratio (length to breadth) of 5 to 20, still preferably 5 to 15. To further improve the characteristics, the ferromagnetic metal powder may contain, as a dopant, a non-metal, e.g., B, C, Al, Si or P, or its salt or oxide. The ferromagnetic metal powder particles usually have an oxide skin layer for securing chemical stability.

The tabular hexagonal ferrite powders that can be used in the invention preferably have a specific surface area of 25 to 65 $m^2$/g, an aspect ratio (diameter to thickness) of 2 to 15, and an average diameter of 0.02 to 1.0 $\mu$m. Tabular

hexagonal ferrite powder particles having too large or small a particle size have difficulty in achieving high density recording for the same reasons as described with respect to the ferromagnetic metal powder. Tabular hexagonal ferrite powder particles have a plate-like shape with the easy magnetization axis perpendicular to the main plane thereof and include, for example, barium ferrite, strontium ferrite, lead ferrite, calcium ferrite, and their cobalt-substituted compounds. Preferred of them are Co-substituted barium ferrite and Co-substituted strontium ferrite. The tabular hexagonal ferrites may further be doped with other elements such as In, Zn, Ge, Nb, and V, to have improved characteristics. It is preferred for the tabular hexagonal ferrite powder to have sufficient magnetic characteristics as well as the above particle size to achieve high recording density, such as a saturation magnetization (as) of 50 A·m$^2$/kg or more, still preferably 53 A·m$^2$/kg or more, and a coercive force (Hc) of 700 to 2000 Oe (56 to 160 kA/m), still preferably 900 to 1600 Oe (72 to 128 kA/m).

The ferromagnetic powder preferably has a water content of 0.01% to 2% by weight. The water content is preferably optimized depending on the kind of the binder to be combined with. The pH of the ferromagnetic powder, which should be optimized depending on the binder, ranges usually from 4 to 12, preferably from 5 to 10. If desired, the ferromagnetic powder is coated with 0.1 to 10% by weight, based on the ferromagnetic powder, of Al, Si, P or an oxide thereof on at least part of its surface. This surface treatment is effective in reducing the adsorption of lubricants, e.g., fatty acids, onto the surface of the particles to 100 mg/m$^2$ or less. Although it is essentially preferred for the ferromagnetic powder to be free of inorganic soluble ions, such as Na, Ca, Fe, Ni, Sr ions, presence of up to 5000 ppm of such inorganic ions in total is little influential on the characteristics. The above-described ferromagnetic powders and processes for preparing the same are described, e.g., in JP-A-7-22224.

The ferromagnetic powder used in the invention is preferably treated with a substance known as a sintering inhibitor, such as Al, Si, p, Ti or a rare earth element (e.g. , Sc, Y, La, Ce, Pr, Nd, Pm, Sm, Eu, Gd, Tb, Dy, Ho, Er, Tm, Yb or Lu), preferably at least Y (yttrium). For the details of these sintering inhibitors, reference can be made to JP-A-52-134858, JP-A-56-114833, JP-A-57-73105, JP-A-6-25702, and JP-A-6-36265.

The lubricants that can be used in the nonmagnetic layer are also applicable to the magnetic layer. The lubricant is usually used in an amount of 0.2 to 20 parts by weight, preferably 0.25 to 10 parts by weight, per 100 parts by weight of the ferromagnetic powder.

Carbon black is used for various purposes, including reduction of surface resistivity (Rs), reduction of dynamic frictional coefficient (μk value), improvement of running durability, and surface smoothness. The carbon black species that can be used in the nonmagnetic layer are also applicable to the magnetic layer, provided that it is preferred for the carbon black for use in the magnetic layer to have an average particle size of 5 to 350 nm, still preferably 10 to 300 nm. Two or more carbon black species different in average particle size may be used in combination. Carbon black is used in an amount usually of from 0.1 to 30 parts by weight, preferably of from 0.2 to 15 parts by weight, per 100 parts by weight of the ferromagnetic powder.

The abrasive that can be used in the magnetic layer includes fused alumina, silicon carbide, chromium oxide ($Cr_2O_3$), corundum, artificial corundum, diamond, artificial diamond, garnet, and emery (mainly comprising corundum and magnetite). These abrasives preferably have a Mohs hardness of 5 or more, still preferably 6 or more, and an average particle size of 0.05 to 1 μm, still preferably 0.2 to 0.8 μm. The abrasive is used usually in an amount of 3 to 25 parts by weight, preferably 3 to 20 parts by weight, per 100 parts by weight of the ferromagnetic powder.

The binders that can be used in the nonmagnetic layer are also applicable to the magnetic layer. The binder is used in an amount usually of from 5 to 50 parts by weight, preferably 10 to 30 parts by weight, per 100 parts by weight of the ferromagnetic powder. A preferred binder system is a combination of a vinyl chloride resin, a polyurethane resin, and a polyisocyanate. In using these binders, their proportions are preferably 5% to 70%, 2% to 50%, and 2% to 50%, by weight, respectively.

The backcoat layer of the magnetic recording medium of the invention preferably has carbon black and inorganic powder having a Mohs hardness of 5 to 9 dispersed in a binder. Backcoat layers having such a formulation are described, e.g., in JP-A-9-115134, and the backcoat layer used in the invention can be designed according to the formulation taught therein. It is preferred to use two carbon black species different in average particle size, i.e., fine carbon black particles having an average particle size, e.g. , of 10 to 20 nm and coarse carbon black particles having an average particle size, e.g. , of 230 to 300 nm, in combination. In general, addition of fine carbon black particles results in low surface resistivity and low light transmission of the backcoat layer. In view of the fact that many magnetic recording systems utilize a transmission of a magnetic tape as an operational signal, addition of fine carbon black particles is specially effective for applications to this kind of systems. Besides, fine carbon black particles are generally excellent in liquid lubricant holding capability and therefore contributory to reduction of the coefficient of friction where a lubricant is used in combination. The coarse carbon black particles, on the other hand, function as a solid lubricant. Furthermore, the coarse particles form micro projections on the backcoat layer surface to reduce the contact area, which contributes to reduction of the frictional coefficient.

Examples of commercially available fine carbon black particles include RAVEN 2000B (average particle size (hereinafter the same) : 18 nm) and RAVEN 1500B (17 nm), both available from Columbian Carbon; BP800 (17 nm) from Cabot Corp.); PRINNTEX 90 (14 nm), PRINTEX 95 (15 nm), PRINTEX 85 (16 nm), and PRINTEX 75 (17 nm), all from Degussa AG; and #3950 (16 nm) from Mitsubishi Chemical Corp. Commercially available coarse carbon black particles include Thermal Black (270 nm) from Cancarb, Ltd.; and RAVEN MTP (275 nm) from Columbian Carbon.

In using two kinds of carbon black having different average particle sizes in the backcoat layer, the weight ratio of fine particles (10 to 20 nm) to coarse particles (230 to 300 nm) is preferably 98:2 to 75:25, still preferably 95:5 to 85:15. The total carbon black content in the backcoat layer usually ranges from 30 to 80 parts by weight, preferably 45 to 65 parts by weight, per 100 parts by weight of the binder.

The inorganic powder having a Mohs hardness of 5 to 9 is used to enhance the strength of the backcoat layer and thereby to improve the running durability of the recording medium. Existence of the inorganic powder with a Mohs hardness of 5 to 9 in the backcoat layer produces moderate abrasive properties to reduce adhesion of grinding debris of carbon black to tape guide poles, etc. The inorganic powder with a Mohs hardness of 5 to 9 preferably has an average particle size of 80 to 250 nm, particularly 100 to 210 nm.

The inorganic powder with a Mohs hardness of 5 to 9 includes $\alpha$-iron oxide, $\alpha$-alumina, and chromium oxide ($Cr_2O_3$). These powders can be used either individually or as a combination. Preferred of them is $\alpha$-iron oxide or $\alpha$-alumina. The content of the inorganic powder having a Mohs hardness of 5 to 9 in the backcoat layer is usually 3 to 30 parts by weight, preferably 3 to 20 parts by weight, per 100 parts by weight of the carbon black.

The backcoat layer may contain lubricants. The lubricant to be added can appropriately be chosen from those described with respect to the nonmagnetic layer. The lubricant is used in an amount usually of from 1 to 5 parts by weight per 100 parts by weight of the binder.

The binder that can be used in the backcoat layer includes those previously described for use in the nonmagnetic layer. A preferred binder system is a combination of a nitrocellulose resin, a polyurethane resin, a polyester resin, and a polyisocyanate. When the combination is used, the nitrocellulose resin, polyurethane resin, polyester resin, and polyisocyanate are preferably used in amounts of 40% to 90% (still preferably 55% to 80%) by weight, 2% to 30% (still preferably 3% to 10%) by weight, 1% to 20% (still preferably 2% to 5%) by weight, and 2% to 50% (still preferably 5% to 30%) by weight, respectively. The total binder content is usually 5 to 250 parts by weight, preferably 10 to 200 parts by weight, per 100 parts by weight of the carbon black in the backcoat layer.

Coating compositions for forming the layers making up the magnetic tape can contain a dispersant for helping disperse the magnetic or nonmagnetic powder, etc. in the binder. If desired, the coating compositions can contain a plasticizer, electroconductive particles other than carbon black (as an antistatic agent), an antifungal agent, and the like. Suitable dispersants include fatty acids having 12 to 18 carbon atoms represented by RCOOH (R is an alkyl or alkenyl group having 11 to 17 carbon atoms), such as caprylic acid, capric acid, lauric acid, myristic acid, palmitic acid, stearic acid, behenic acid, oleic acid, elaidic acid, linoleic acid, linolenic acid, and stearolic acid; copper oleate; metallic soaps formed between these fatty acids and alkali metals or alkaline earth metals; fluorine-containing esters of these fatty acids; amides of these fatty acids; polyalkylene oxide alkylphosphoric esters; lecithin; tri(C1 to C5 alkyl) polyolefinoxy (e.g., polyethyleneoxy or polypropyleneoxy) quaternary ammonium salts; sulfates; and copper phthalocyanine. These dispersants can be used either individually or as a combination thereof. Preferred of them is a combination of copper oleate, copper phthalocyanine, and barium sulfate. The dispersant is used in an amount of 0.5 to 20 parts by weight per 100 parts by weight of the binder system in each layer.

The magnetic tape of the invention can be manufactured in a usual manner. The method of manufacturing includes the steps of forming a nonmagnetic layer and a magnetic layer on one side of a broad continuous web of a support and a backcoat layer on the other side and slitting the coated web to widths. The method further includes various processings generally practiced, such as drying, orientation, calendering, and winding, during, before or after each step. Calendering is usually carried out at a roll temperature of 60° to 120°C, preferably 70° to 115°C, still preferably 80° to 100°C, under a pressure of 100 to 400 kg/cm (98 to 392 kN/m), preferably 200 to 350 kg/cm (196 to 343 kN/m), still preferably 250 to 350 kg/cm (245 to 343 kN/m). Calender rolls made of heat resistant plastics, such as epoxy resins, polyimide, polyamide, and polyamide-imide, are used. Metal rolls may also be employed.

The magnetic layer is preferably provided while the nonmagnetic layer is wet. That is, the magnetic layer is preferably formed by a wet-on-wet coating system in which a coating composition for a magnetic layer is applied while the underlying coating film of a coating composition for a nonmagnetic layer is wet.

More specifically, the following wet-on-wet coating systems can be followed to form the nonmagnetic and magnetic layers.

(a) A method comprising forming a nonmagnetic layer by using a coating apparatus, such as a gravure coater, a roll coater, a blade coater or an extrusion coater, and forming a magnetic layer while the nonmagnetic layer is wet by means of an extrusion coating apparatus disclosed in JP-A-60-238179, JP-B-1-46186, and JP-A-2-265672 which is of the type in which a support is pressed while coated.

(b) A method in which the magnetic layer and the nonmagnetic layer are applied almost simultaneously through a single coating head disclosed in JP-A-63-88080, JP-A-2-17971, and JP-A-2-265672, the coating head having two slits through which the respective coating liquids pass.

(c) A method in which the magnetic and nonmagnetic layers are applied almost simultaneously by means of an extrusion coating apparatus disclosed in JP-A-2-174965, the apparatus being equipped with a back-up roll. In the present invention, the nonmagnetic and the magnetic layers are preferably formed by simultaneous coating methods.

EXAMPLES

The present invention will now be illustrated in greater detail with reference to Examples, but it should be understood that the invention is not construed as being limited thereto. Unless otherwise noted, all the parts are by weight.

EXAMPLES 1 TO 4, REFERENCE EXAMPLE 1 AND COMPARATIVE EXAMPLES 1 TO 2

Formulation of nonmagnetic coating composition

| | |
|---|---|
| Nonmagnetic powder: $\alpha$-Fe$_2$O$_3$ hematite (average length: 0.15 $\mu$m; BET specific surface area: 52 m$^2$/g; pH: 8; tap density: 0.8 g/ml; DPB absorption: 27 to 38 ml/100 g; surface treatment layer: Al$_2$O$_3$, SiO$_2$) | 80 parts |
| Carbon black (average primary particle size: 16 nm; DBP absorption: 80 ml/100 g; pH: 8.0; BET specific surface area: 250 m$^2$/g; volatile content: 1.5%) | 20 parts |
| Vinyl chloride copolymer (MR-104, available from Zeon Corp.) | 12 parts |
| Polyester polyurethane resin (neopentyl (by mole); glycol/caprolactone polyol/MDI = 0.9/2.6/1 -SO$_3$Na content: 1x10$^{-4}$ eq/g) | 5 parts |
| $\alpha$-Al$_2$O$_3$ (average particle size: 0.1 $\mu$m) | 1 part |
| Butyl stearate | 1 part |
| Stearic acid | 1 part |
| Methyl ethyl ketone | 100 parts |
| Cyclohexanone | 50 parts |
| Toluene | 50 parts |

Formulation of magnetic coating composition

| | |
|---|---|
| Ferromagnetic metal powder (Fe/Co = 100/30 by atom; Hc: 191 kA (2400 Oe); BET specific surface area: 48 m$^2$/g; crystallite size: 13 nm; surface treatment layer: Al$_2$O$_3$, Y$_2$O$_3$; particle size (length) : 0.06 $\mu$m; aspect ratio: 6; $\sigma$s: 120 Am$^2$/kg (120 emu/g)) | 100 parts |
| Vinyl chloride copolymer (MR-104 from Zeon Corp.) | a parts (see Table 1) |
| Polyester polyurethane resin (neopentyl glycol/caprolactone polyol/MDI = 0.9/2.6/1; -SO$_3$Na content: 1x10$^{-4}$ eq/g) | b parts (see Table 1) |
| $\alpha$-Al$_2$O$_3$ (average particle size: 0.1 $\mu$m) | 3 parts |
| $\alpha$-Al$_2$O$_3$ (average particle size: 0.23 $\mu$m) | 2 parts |
| Carbon black (average particle size: 0.08 $\mu$m) | 0.5 parts |
| Butyl stearate | 1 part |
| Stearic acid | 5 parts |
| Methyl ethyl ketone | 90 parts |
| Cyclohexanone | 30 parts |
| Toluene | 60 parts |

Formulation of backcoating composition

| | |
|---|---|
| Fine carbon black particles (BP-800, available from Cabot Corp.; average particle size: 17 nm) | 100 parts |

(continued)

| | |
|---|---|
| Coarse carbon black particles (Thermal Black from Cancarb, Ltd.; average particle size: 270 nm) | 10 parts |
| Alpha-iron oxide (TF100 from Toda Kogyo Corp.; average particle size: 110 nm; Mohs hardness: 5.5) | 15 parts |
| Nitrocellulose resin | c parts (see Table 1) |
| Polyurethane resin | d parts (see Table 1) |
| Polyester resin | 5 parts |
| Dispersant system | |
| Copper oleate | 5 parts |
| Copper phthalocyanine | 5 parts |
| Barium sulfate | 5 parts |
| Methyl ethyl ketone | 2200 parts |
| Butyl acetate | 300 parts |
| Toluene | 600 parts |

The above components of the nonmagnetic coating composition were kneaded in an open kneader and dispersed in a sand mill. To the dispersion were added 5 parts of a polyisocyanate (Coronate L from Nippon Polyurethane Industry Co., Ltd.) and 40 parts of a methyl ethyl ketone/cyclohexanone mixed solvent, in which the polyisocyanate is dispersed. The dispersion was filtered through a filter having an opening size of 1 $\mu$m to prepare a nonmagnetic coating composition.

A magnetic coating composition was prepared in the same manner, except for changing the amount of the polyisocyanate to 8 parts.

A backcoating composition was prepared by adding 5 parts of a polyisocyanate (Coronate L from Nippon Polyurethane) and 2200 parts of methyl ethyl ketone, 300 parts of butyl acetate, and 600 parts of toluene, in which the polyisocyanate is dispersed, to the mixture of the above-described components, kneading the mixture in a continuous kneader, and dispersing the mixture in a sand mill, followed by filtration in the same manner as described above.

Supports having a thickness of 6.5 $\mu$m and different in stiffness (Young's modulus) as shown in Table 1 were used. The nonmagnetic coating composition and the magnetic coating composition were simultaneously applied to one side of the support to a dry thickness of 1.5 $\mu$m and 0.2 $\mu$m, respectively. The two coating layers were magnetically oriented while wet using a cobalt magnet with a magnetic force of 0.3 T (3000 G) and a solenoid with a magnetic force of 0.15 T (1500 G) and then dried. The coated film was calendered on a 7-roll calender having metal rolls and/or epoxy resin rolls under the conditions shown in Table 1. The backcoating composition was applied to the other side of the support to a dry thickness of 0.5 $\mu$m. The resulting coated web had a total thickness of 8.7 $\mu$m.

For the purpose of strengthening the magnetic layer, nonmagnetic layer, and backcoat layer and preventing the flexible support from thermal deformation, the coated web was allowed to stand at 50° to 80°C for 24 to 72 hours. Thereafter, the resulting web was slit to a width of 1/2 inch by the use of the apparatus illustrated in Fig. 8. The slitting conditions (slitting speed, depth of cut, and upper to lower blade peripheral speed ratio) and the rounded profiles (W1 and W2) of the upper and lower blades of the slitting apparatus are shown in Table 1.

The resulting magnetic tapes were evaluated as follows. The results obtained are shown in Table 2.

(1) Ridge protruding above the surface plane of magnetic layer or backcoat layer along the slit edge

A compact scanning ion microscope SMI2050 available from SII NanoTechnology Inc. was used. The edges of a magnetic tape were processed with a focused Ga ion beam and observed and photographed with a scanning ion microscope. A transparent film was put on the micrograph, and the contour of the edge (restrained side and non-restrained side) was traced with a ultrafine-tipped marker pen to obtain an image like Fig. 1. The height of a ridge along the edge beyond the surface plane of the magnetic layer and the backcoat layer was measured on the image.

In Table 2, the symbol minus (-) indicates that there was a distance a from the straight line 95 indicative of the surface plane of the magnetic layer 93 to the tip of the edge of the magnetic layer 93 or a distance b from the straight line 96 indicative of the surface plane of the backcoat layer 94 to the tip of the edge of the backcoat layer 94 as illustrated in Fig. 1. The figures following the symbol minus indicate the distance a or b. The symbol plus (+) indicates that the ridge 931 of the magnetic layer 93 or the ridge 941 of the backcoat layer 94 protrudes above the straight line 95 or 96 indicative of the surface plane of the magnetic layer 93 or the backcoat layer 94, respectively. The figures following the symbol plus indicate the height of the ridges from the respective straight lines.

(2) Young's modulus of the magnetic layer and the backcoat layer in their thickness direction

A three-sided pyramidal diamond nanoindenter having a radius of 100 nm at the vertex a, a rake angle of 65°, and an apex angle of 115° was pressed onto the surface of the magnetic layer or the backcoat layer to a maximum load of 6 mgf (58.8 μN) and then removed to obtain a load-displacement curve. The Young' s modulus (W) of the magnetic layer or the backcoat layer is obtained from the unloading part of the curve according to equation:

$$W = 1.8129 \times 10^{-1}H_1^{-1}(dP/dH) \ (kg/mm^2) = 1.8H_1^{-1}(dP/dH) \ (MPa)$$

where $H_1$ is a displacement at an intersection between a tangent to the unloading curve at the maximum displacement and the abscissa (i.e., zero load) ; and dP/dH is the slope of the tangent to the unloading curve at the maximum displacement.

The measurement was taken with a nanoindentation tester ENT-1100 available from Elionix Inc. The equipment specifications are as follows.

- Load application: electromagnetic force
- Indenter: three-sided pyramidal diamond nanoindenter (apex angle: 115°)
- Load range: 2 mgf to 100 gf (19.6 μN to 0.98 N)
- Loading resolution: 0.2 μN
- Displacement measurement: travel of the nanoindenter was detected by capacitive sensing.
- Maximum indentation depth: 20 μm
- Displacement resolution: 0.3 nm

A 5 mm-side square test piece cut out of the magnetic tape was fixed with an instant adhesive (Aron Alpha) on the exclusive stage made of cast iron (Nobinite CF5). After drying for fixation, the test piece was conditioned in the measuring environment for about 30 minutes before measurement. The measuring conditions were as follows.

- Testing load: 6 mgf (58.8 μN)
- Number of steps: 100
- Step interval: 100 msec
- Manner of loading: The load was continuously increased up to 6 mgf over 10 seconds, held at 6 mgf for one second, followed by unloading over 10 seconds.
- Measuring environment: 28±0.1°C
- Measuring points: 9 (Data with noise and data showing an extremely large or small maximum displacement were discarded, and only the intermediate five pieces of data were used.)

(3) Young's modulus of support in longitudinal direction (MD) Measured in the manner described *supra.*

(4) Head contamination

After the magnetic tape was run on a drive, contamination of the head was microscopically inspected under a digital microscope from Keyence Corp. and rated on an AA to C scale.

AA: Very slight
A: Slight
B: Slightly heavy
C: Heavy

(5) Wind quality

The non-restrained slit side edge of a tape pack was photographed with a digital camera. Any radial pattern observed on the photograph with the naked eye was rated on an AA to C scale.

AA: No radial pattern is observed.
A: A radial pattern is slightly observed.
B: A faint radial pattern is observed.

C: A clear radial pattern is observed.

(6) C/N

The tape was tested on a drum tester equipped with a metal-in-gap (MIG) writing head (gap: 0.15 $\mu$m; track width: 18 $\mu$m; saturation magnetic flux density Bs: 1.8T) and a shielded magnetoresistive (MR) reading head (shield-to-shield spacing: 0.2 $\mu$m; track width : 4 $\mu$m). Single frequency signals having a recording wavelength of 0.2 $\mu$m (50 MHz) were recorded at a head/medium relative velocity of 10 m/sec. The reproduced signals were analyzed with a spectrum analyzer supplied by ShibaSoku Co., Ltd. The ratio of the output voltage of the single frequency signals to the noise voltage at a frequency 1 MHz apart from the single frequency is taken as a C/N (dB). In reading, a bias current was applied to the MR head so as to give maximum output.

(7) Dropout ratio (DO)

Signals were recorded on the magnetic tape at a write track width of 15 $\mu$m, a recording wavelength of 0.36 $\mu$m, and a tape speed of 2.5 m/sec and reproduced using an MR head at a read track width of 7.5 $\mu$m and a tape speed of 2.5 m/sec. The number of dropouts per megabyte recorded was counted. The term "dropout" as used herein is defined as a reduction of 50% or more in amplitude for a period of 0.08 $\mu$sec.

**TABLE 1**

| | Support | | | | Calendering Conditions | | | | Slitting Conditions | | | Blade Profile | |
|---|---|---|---|---|---|---|---|---|---|---|---|---|---|
| | Material | Young's Modulus (kg/mm$^2$) | a/b in Magnetic Layer | c/d in Back-coat Layer | Roll Material | Temp. (°C) | Linear Pressure (kg/cm) | Speed (m/min) | Slitting Speed (m/min) | Depth of Cut (mm) | Peripheral Speed Ratio | W1 (μm) | W2 μm) |
| | | | Compounding Ratio (part) | | | | | | | | | | |
| Example 1 | polyamide | 2000 | 12/2.6 | 140/12 | metallic* | 90 | 330 | 200 | 350 | 0.3 | 1.00 | 3.0 | 2.8 |
| Example 2 | polyamide | 2100 | 12/3.0 | 140/13 | metallic | 70 | 300 | 200 | 350 | 0.5 | 1.05 | 2.5 | 2.2 |
| Example 3 | polyamide | 1749 | 12/4.4 | 140/19 | elastic** | 90 | 250 | 150 | 300 | 0.5 | 1.05 | 1.8 | 1.5 |
| Reference Example 1 | polyamide | 1749 | 12/4.6 | 140/16 | elastic | 80 | 250 | 150 | 300 | 0.3 | 1.00 | 1.5 | 1.3 |
| Example 4 | PET | 955 | 12/3.4 | 140/12 | elastic | 70 | 250 | 150 | 300 | 0.3 | 1.05 | 1.0 | 0.9 |
| Comp. Example 1 | PET | 955 | 12/2.7 | 140/17 | metallic | 80 | 330 | 200 | 300 | 0.3 | 1.05 | 0.3 | 0.2 |
| Comp. Example 2 | PEN | 933 | 12/3.5 | 140/18 | elastic | 60 | 250 | 150 | 250 | 0.5 | 1.00 | 0.2 | 0.1 |

\*: A combination of metallic rolls and elastic (epoxy resin) rolls
\*\*: All the rolls were elastic rolls.

TABLE 2

| | Ridge on the Edge (μm) | | Young's Modulus (kg/mm²) | | | Performance Characteristics | | | |
|---|---|---|---|---|---|---|---|---|---|
| | Magnetic Layer (non-restra ined side) | Backcoat Layer (restrained side) | Magnetic Layer | Backcoat Layer | Support | Head Contami-n ation | Wind Quality | C/N (dB) | DO (/MB) |
| Example 1 | -0.17 | -0.08 | 2500 | 2000 | 2000 | AA | AA | 2.5 | 0.8 |
| Example 2 | -0.21 | -0.05 | 2132 | 1730 | 2100 | A | AA | 2.0 | 0.7 |
| Example 3 | -0.12 | -0.07 | 1116 | 550 | 1749 | A | AA | 1.5 | 0.6 |
| Reference Example 1 | -0.05 | -0.03 | 950 | 1178 | 1749 | A | A | 0.2 | 1.5 |
| Example 4 | -0.15 | -0.15 | 1894 | 1844 | 955 | A | A | 0.3 | 1.0 |
| Comp. 1 Example 1 | +0.20 | -0.02. | 2400 | 800 | 955 | B | B | -0.5 | 2.0 |
| Comp. Example 2 | +0.30 | 0.15 | 1770 | 650 | 933 | C | C | -1.3 | 45.0 |

In the Examples, there was no ridge of the magnetic layer along the restrained side edge that protruded above the surface plane of the magnetic layer. Nor was there a ridge of the backcoat layer on the non-restrained side edge that protruded over the surface plane of the backcoat layer.

The magnetic tapes of Comparative Examples 1 and 2 produced scrapings on running, had a poor wind quality, contaminated the head, and had a low CN and a high DO. The tapes of Examples 1 to 4 had a good wind quality, hardly caused head contamination, and had a high CN and a low DO.

**Claims**

1. A magnetic recording medium comprising:

   a magnetic layer (93) containing ferromagnetic powder and a binder;
   a support (91); and
   a backcoat layer (94), in this order,
   wherein the magnetic recording medium is obtained by slitting to width a magnetic material of broad width and continuous lengthy bod the magnetic recording medium has no ridge formed of the magnetic layer (93) along an edge thereof, the ridge being defined to be a protrusion beyond a surface plane of the magnetic layer; (93) **characterized in that** the magnetic layer has a Young's modulus of 1000 to 2500 kg/mm$^2$ in its thickness direction.

2. The magnetic recording medium as claimed in claim 1, which has no ridge formed of the backcoat layer (94) along an edge thereof, the ridge being defined to be a protrusion beyond a surface plane of the backcoat layer (94).

3. The magnetic recording medium as claimed in claim 1, wherein the magnetic layer has a Young's modulus of 1250 to 2300 kg/mm$^2$ in its thickness direction.

4. The magnetic recording medium as claimed in claim 1, wherein the backcoat layer has a Young' s modulus of 600 to 2000 kg/mm$^2$ in its thickness direction.

5. The magnetic recording medium as claimed in claim 1, wherein the backcoat layer has a Young's modulus of 700 to 1800 kg/mm$^2$ in its thickness direction.

6. The magnetic recording medium as claimed in claim 1, wherein the support has a Young's modulus of 700 to 2000 kg/mm$^2$ in its longitudinal direction.

7. The magnetic recording medium as claimed in claim 1, wherein the support has a Young's modulus of 933 to 1749 kg/mm$^2$ in its longitudinal direction.

8. The magnetic recording medium as claimed in claim 1, further comprising a nonmagnetic layer containing nonmagnetic powder and a binder between the support and the magnetic layer.

9. The magnetic recording medium as claimed in claim 1, wherein the backcoat layer contains a binder, carbon black and inorganic powder having a Mohs hardness of 5 to 9.

**Patentansprüche**

1. Magnetisches Aufzeichnungsmedium, umfassend in dieser Reihenfolge:

   eine magnetische Schicht (93), die ferromagnetisches Pulver und ein Bindemittel umfaßt;
   einen Träger (91); und
   eine Rückbeschichtungsschicht (94),
   worin das magnetische Aufzeichnungsmedium erhalten wird durch Zuschneiden eines magnetischen Materials mit großer Breite und kontinuierlicher Länge auf Breite; wobei das magnetische Aufzeichnungsmedium keine aus der magnetischen Schicht (93) gebildete Erhöhung entlang einer Kante hiervon aufweist, wobei die Erhöhung als Vorstoß über eine Oberflächenebene der magnetischen Schicht (93) definiert ist; **dadurch gekennzeichnet, daß** die magnetische Schicht ein Young-Modul von 1.000 bis 2.500 kg/mm$^2$ in Richtung der Dicke aufweist.

**2.** Magnetisches Aufzeichnungsmedium gemäß Anspruch 1, welches keine aus der Rückbeschichtungsschicht (94) gebildete Erhöhung entlang einer Kante hiervon aufweist, wobei die Erhöhung als Vorstoß über die Oberflächenebene der Rückbeschichtungsschicht (94) definiert ist.

**3.** Magnetisches Aufzeichnungsmedium gemäß Anspruch 1, worin die magnetische Schicht ein Young-Modul von 1.250 bis 2.300 kg/mm$^2$ in Richtung der Dicke aufweist.

**4.** Magnetisches Aufzeichnungsmedium gemäß Anspruch 1, worin die Rückbeschichtungsschicht ein Young-Modul von 600 bis 2.000 kg/mm$^2$ in Richtung der Dicke aufweist.

**5.** Magnetisches Aufzeichnungsmedium gemäß Anspruch 1, worin die Rückbeschichtungsschicht ein Young-Modul von 700 bis 1.800 kg/mm$^2$ in Richtung der Dicke aufweist.

**6.** Magnetisches Aufzeichnungsmedium gemäß Anspruch 1, worin der Träger ein Young-Modul von 700 bis 2.000 kg/mm$^2$ in Längsrichtung aufweist.

**7.** Magnetisches Aufzeichnungsmedium gemäß Anspruch 1, worin der Träger ein Young-Modul von 933 bis 1.749 kg/mm$^2$ in Längsrichtung aufweist.

**8.** Magnetisches Aufzeichnungsmedium gemäß Anspruch 1, ferner umfassend zwischen dem Träger und der magnetischen Schicht eine nicht-magnetische Schicht, die nicht-magnetisches Pulver und ein Bindemittel umfaßt.

**9.** Magnetisches Aufzeichnungsmedium gemäß Anspruch 1, worin die Rückbeschichtungsschicht ein Bindemittel, Ruß und anorganisches Pulver mit einer Mohs-Härte von 5 bis 9 umfaßt.

**Revendications**

**1.** Support d'enregistrement magnétique comprenant :

une couche magnétique (93) contenant une poudre ferromagnétique et un liant ;
un support (91) ; et
une couche dorsale (94), dans cet ordre,
dans lequel le support d'enregistrement magnétique est obtenu en séparant dans la largeur un matériau magnétique de grande largeur et de longueur continue ; le support d'enregistrement magnétique ne présente aucune nervure formée de la couche magnétique (93) le long de son bord, la nervure étant définie pour être une protubérance au-delà d'un plan de surface de la couche magnétique (93) ; **caractérisé en ce que** la couche magnétique présente un module de Young de 1000 à 2500 kg/mm$^2$ dans sa direction en épaisseur.

**2.** Support d'enregistrement magnétique selon la revendication 1, qui ne présente aucune nervure formée de la couche dorsale (94) le long de son bord, la nervure étant définie pour être une protubérance au-delà d'un plan de surface de la couche dorsale (94).

**3.** Support d'enregistrement magnétique selon la revendication 1, dans lequel la couche magnétique présente un module de Young de 1250 à 2300 kg/mm$^2$ dans sa direction en épaisseur.

**4.** Support d'enregistrement magnétique selon la revendication 1, dans lequel la couche dorsale présente un module de Young de 600 à 2000 kg/mm$^2$ dans sa direction en épaisseur.

**5.** Support d'enregistrement magnétique selon la revendication 1, dans lequel la couche dorsale présente un module de Young de 700 à 1800 kg/mm$^2$ dans sa direction en épaisseur.

**6.** Support d'enregistrement magnétique selon la revendication 1, dans lequel le support présente un module de Young de 700 à 2000 kg/mm$^2$ dans sa direction longitudinale.

**7.** Support d'enregistrement magnétique selon la revendication 1, dans lequel le support présente un module de Young de 933 à 1749 kg/mm$^2$ dans sa direction longitudinale.

8. Support d'enregistrement magnétique selon la revendication 1, comprenant en outre une couche non magnétique contenant de la poudre non magnétique et un liant entre le support et la couche magnétique.

9. Support d'enregistrement magnétique selon la revendication 1, dans lequel la couche dorsale contient un liant, du noir de carbone et de la poudre inorganique présentant une dureté Mohs de 5 à 9.

## FIG. 1

## FIG. 2

# FIG. 3A

84

841

W1

# FIG. 3B

851

85

W2

## FIG. 4

FIG. 5

EP 1 742 205 B1

FIG. 6

# FIG. 7

## FIG. 8
## PRIOR ART

AXIAL DIRECTION

# FIG. 9
## PRIOR ART

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5182178 A
- JP 11296839 A
- JP 2001273629 A
- US 20010009726 A
- JP 7022224 A
- JP 52134858 A
- JP 56114833 A
- JP 57073105 A
- JP 6025702 A
- JP 6036265 A
- JP 9115134 A
- JP 60238179 A
- JP 1046186 B
- JP 2265672 A
- JP 63088080 A
- JP 2017971 A
- JP 2174965 A